# EUROPÄISCHE PATENTSCHRIFT

(11) **EP 1 127 764 B1**
(45) Veröffentlichungstag und Bekanntmachung des Hinweises auf die Patenterteilung: **08.09.2004**
(21) Anmeldenummer: 01100061.9
(22) Anmeldetag: 10.01.2001
(51) Int. Cl.: B60T 8/36, B60T 13/68, B60T 13/26, F16K 27/00, F16K 31/06

(54) **Konstruktion eines Bremsdruckmodulators für einen Anhänger mit elektronischer Bremsanlage**
Construction of a brake pressure modulator for a trailer with electronic braking system
Construction d'un modulateur de pression de freinage d'une remorque avec un système de freinage électronique

(30) Priorität: 26.02.2000 DE 10009117
(43) Veröffentlichungstag der Anmeldung: 29.08.2001
(73) Patentinhaber: WABCO GmbH & CO. OHG, 30453 Hannover (DE)
(72) Erfinder: Frank, Dieter, 30171 Hannover (DE); Homann, Peter, 31535 Neustadt (DE); Kranz, Andreas, Dr., 31515 Wunstorf (DE); Sieker, Armin, 33611 Bielefeld (DE); Meier, Dirk, 30926 Seelze (DE); Schreiber, Gerdt, 30916 Isernhagen (DE); Wolff, Hans-Klaus, 31832 Springe (DE)
(74) Vertreter: Schrödter, Manfred

(56) Entgegenhaltungen:
- EP-A- 0 478 953
- EP-A- 0 856 447
- EP-A- 1 022 204
- DE-A- 19 609 222
- GB-A- 1 389 055
- US-A- 6 000 679

## Beschreibung

Die Erfindung betrifft einen Bremsdruckmodulator.

Aus der DE 42 27 084 A1 ist ein Bremsdruckmodulator, dort Druckregelmodul genannt, bekannt.

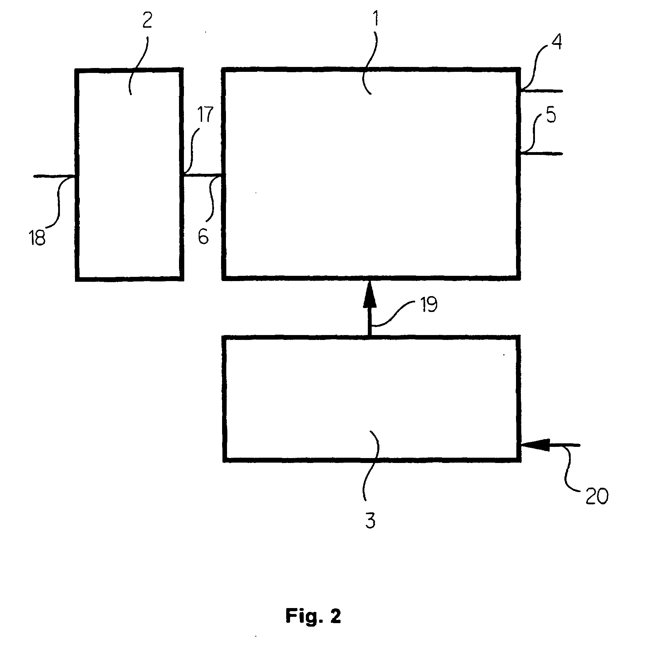

Die bekannte Schrift zeigt ein zwei-kanaliges Druckregelmodul [dort Fig. 2], bei dem für beide Kanäle als Umschaltventil ein gemeinsames 3/2-Wege-Magnetventil [dort (12)] vorgesehen ist, das die zu den weiteren Magnetventilen führende Leitung [dort (15)] entweder mit dem Vorratsdruck [dort (17) in betätigtem Zustand des Ventiles (12)] oder mit einem Steuerdruck [dort (13) in unbetätigtem Zustand des Ventiles (12)] verbindet; für das Folgende sei angenommen, daß das 3/2-Wege-Magnetventil betätigt ist, so daß der Vorratsdruck an den weiteren Magnetventilen anliegt - dies stellt den Fall der Druckregelung dar.

Betrachtet wird einer von beiden symmetrisch aufgebauten Druckregelkreisen, nämlich derjenige, für den dort die Ventile (9'), (7), (3) vorgesehen sind. Das 3/2-Wege-Magnetventil [dort (9')] gibt die Richtung der Druckveränderung vor; in unbetätigtem Zustand [wie in dieser Zeichnung dargestellt] erfolgt eine Druckerhöhung, da der Vorratsdruck wirksam ist, in betätigtem Zustand erfolgt eine Absenkung durch die Verbindung mit der Entlüftung [dort (11')]. Zu diesem Ventil ist in Reihe geschaltet das 2/2-Wege-Magnetventil [dort (7)], das entweder eine Verbindung zu einem Steuereingang des nachfolgenden Relaisventils herstellt [dort Steuereingang (5) in der gezeichneten, nicht betätigten Ventilstellung] oder diesen Steuereingang abschließt [betätigte Ventilstellung].

Durch die Reihenschaltung beider Ventile müssen diese gemeinsam in einen bestimmten Zustand gebracht werden, um eine gewünschte Druckveränderung am Steuereingang zu bewirken. Sie sind also nicht unabhängig voneinander, sondern nur gleichzeitig miteinander zu betreiben. Dies stellt einen kostenmäßigen Nachteil dar, weil durch die Verwendung eines 3/2-Wege-Magnetventiles mit Umschaltfunktion [dort (9')] und die Anforderungen an hohe Dichtigkeit an den beiden entsprechenden Ventilsitzen relativ hohe Aufwendungen erforderlich sind.

Aus der DE 196 09 222 A1 ist ein für ein Zugfahrzeug mit elektronisch gesteuerter Druckluftbremsanlage vorgesehenes Anhängersteuerventil bekannt, bei dem zur Reduzierung des konstruktiven Aufwandes nur eine Steuerkammer mit Steuerkolben vorgesehen ist, welche über drei parallel zueinander geschaltete, an eine gemeinsame zur Steuerkammer führende pneumatische Steuerleitung angeschlossene und elektromagnetisch betätigbare 2/2-Wegeventile mit Federrückstellung, nämlich erstens einem zuströmseitig mit der Vorratsleitung verbundenen und abströmseitig an die Steuerleitung angeschlossenen stromlos geschlossenen Einlaßventil, zweitens einem zwischen einem pneumatisch erzeugten Bremsdruckanforderungssignal (nämlich dem Redundanzdruck) und der Steuerleitung zwischengeschälteten stromlos offenen Rückhalteventil und drittens einem zuströmseitig an die Steuerleitung angeschlossenen und abströmseitig mit einer Druckentlastungsstelle verbundenen stromlos geschlossenen Auslaßventil, mit Druck beaufschlagt wird. Eine Steuerelektronik moduliert den vom Anhängersteuerventil ausgesteuerten Bremsdruck, indem sie die drei Ventile in folgender Weise ansteuert: Zum Druckaufbau wird das Einlaßventil in seine Durchlaßstellung geschaltet, während das Auslaßventil in seiner Sperrstellung verharrt; zum Druckhalten wird das Einlaßventil in seine Sperrstellung geschaltet und zum Druckabbau verharrt das Einlaßventil in seiner Sperrstellung, während das Auslaßventil in die Durchgangsstellung geschaltet wird. Zur Durchführung der Modulation wird der ausgesteuerte Druck mit Hilfe eines Drucksensors von der Steuerelektronik gemessen. Bei gestörtem elektrischen Steuerkreis wird das pneumatische Bremsdruckanforderungssignal über das durchlässige Rückhalteventil in die Steuerkammer des Anhängersteuerventils geleitet, während das Einlaß- und das Auslaßventil in ihrer Ruhestellung, der Sperrstellung, verharren. Während die Magnetanker des im Ruhezustand geschlossenen Einlaßventils und des im Ruhezustand ebenfalls geschlossenen Auslaßventils über ungefederte Magnetanker-Dichtelemente zur Herstellung der dichtenden Abschlüsse mit dem jeweiligen Dichtsitz verfügen, ist der Magnetanker des Rückhalteventils mit einem federbelasteten Dichtelement, der üblichen Schutzmaßnahme von Magnetanker-Dichtelementen gegen ihre mechanische Beschädigung durch die kinetische Energie des Magnetankers beim Aufschlagen auf den Dichtsitz, ausgerüstet, die immer dann wirksam ist, wenn das Ventil elektrisch geschaltet und der Magnetanker über die Magnetkraft beschleunigt aus seiner Ruhestellung in seine Schaltstellung bewegt wird und dort den Dichtsitz abschließt.

Die EP 0 478 953 A1 beschreibt eine elektropneumatische Bremsanlage, bei der ein pneumatischer und ein elektrischer Steuerkreis vorhanden sind und bei der für den elektrischen Kreis zwei Drucksteuerventile mit je drei als 2/2-Ventile ausgebildeten Elektro-Magnetventilen vorgesehen sind, welche zur ABS-Steuerung sowie zum elektrischen Einregeln eines von einem Bremswertgeber vorgegebenen Drucks über ein elektronisches Steuergerät bestromt werden. Die Elektro-Magnetventile sind parallel zueinander geschaltet und für jedes der beiden Drucksteuerventile ist je ein Relaisventil vorgesehen, an welches ein Bremszylinder des Fahrzeugs angeschlossen ist. Eines der Magnetventile dient, wenn bestromt, zur Druckanstiegssteuerung, ein anderes Magnetventil dient im bestromten Zustand zur Druckentlastung, und ein Magnetventil ist stromlos offen und stellt auf diese Weise sicher, daß das entsprechende Relaisventil für den Fall der ausgefallenen Elektrik mit dem pneumatischen Ausgang eines elektro-pneumatischen Bremswertgebers verbunden ist. Diese Schrift geht in besonderer Weise auf den Abgleich der Bremsdrücke bei elektronisch gesteuerter Bremsung und bei pneumatischer Bremsung im Falle des Elektrik-Ausfalls ein.

Die nachveröffentlichte EP 1 022 204 A2 schlägt ein Anhängersteuerventil für ein Zugfahrzeug mit elektro-pneumatischer Bremseinrichtung vor, bei dem der modulierte Bremsdruck im vorrangigen elektro-pneumatischen Steuerkreis auf einen niedrigen Wert eingeregelt werden kann, ohne daß der nachrangige pneumatische Betriebsbremskreis an einem zweiten Steuerkolben anspricht. Für die elektro-pneumatische Bremsregelung ist ein elektronisches Steuergerät vorgesehen, welches drei parallel zueinander geschaltete 2/2-Magnetventile, ein Rückhalteventil, ein Einlaßventil und ein Auslaßventil ansteuert. Das Rückhalteventil ist stromlos offen und dient bei ausgefallenem elektro-pneumatischen Steuerkreis zur Übertragung des Bremsdrucks aus dem pneumatischen Betriebsbremskreis in die Steuerkammer des Doppelsitzventils zum Bremszylinder. Einlaß- und Auslaßventil sind als stromlos geschlossene Ventile ausgeführt und werden durch das elektronische Steuergerät bei gesperrtem Rückhalteventil zur Bremsdruck-Erzeugung auf der Basis des elektronischen Bremsanforderungssignals über die elektrischen Steueranschlüsse wie folgt moduliert: Zum Druckaufbau in der Anhängerventil-Steuerkammer wird das Einlaßventil in seine Durchgangsstellung geschaltet, während das Auslaßventils in seiner Sperrstellung verbleibt; für das Druckhalten wird das Einlaßventil in seine Sperrstellung umgeschaltet, und für den Druckabbau bleibt das Einlaßventil in seiner Sperrstellung, während das Auslaßventil in seine Durchgangsstellung geschaltet wird. Konstruktiv sind die Anker unterschiedlich ausgestaltet; das stromlos offene Rückschlagventil weist im Gegensatz zum Magnetanker des Auslaßventils ein federbelastetes Dichtelement auf.

Die US 6,000,679 offenbart robuste Mittel zur Verbindung einer Spulenanordnung für z. B. eine elektrohydralische ABS-Einrichtung einerseits mit der Platine der zugehörigen elektronischen Steuereinrichtung andererseits. Die empfindlichen Spulen-Zuleitungsdrähte sind zum Transport durch ein Trichter-Schutzelement gegen Beschädigung geschützt und werden dann bei der Montage mit der Platine in einer Lötposition arretiert und fest gelötet; die solcherweise fixierten Zuleitungsdrähte können dann für die Endmontage des Gerätes noch gekrümmt werden, um Fertigungstoleranzen auszugleichen.

Aus der EP 0 856 447 A2 ist ein Steuergerät für ein Antiblockiersystem bekannt, bei dem ein flexibler Leiterbahnträger auf einen Ventilblock zuerst aufgesetzt und um den Ventilblock z. B. rechtwinklig gebogen wird. Beide Teile werden dann zu einem Steuergerät-Gehäuse umgebildet, indem sie in eine Form eingelegt und mit Kunststoff umschäumt oder umspritzt werden. Vor dieser Umbildung ist der Leiterbahnträger mit sämtlichen Bauteilen bestückt, in einem Bereich sind dies alle sowohl passiven als auch aktiven elektronischen Bauelemente, in einem Bereich ist es die Steckerleiste, und in einem Bereich sind es die Ventilspulen, welche in Reihe zueinander auf dem Leiterplattenträger eingesteckt und dort verlötet sind. Vor dem Bestücken des Leiterbahnträgers kann die Ventilspule unter Verwendung von Kunststoffmitteln auch zu einem Block zusammengebaut werden, bei dem die Ventilspulen zueinander eine gewisse Beweglichkeit aufweisen.

Die GB 1 389 055 schlägt ein Magnetventil vor, dessen Magnetanker bei nicht bestromtem Magneten durch die Kraft einer Feder an einer ersten Position angelegt ist, an der ein Entlüftungsanschluß vorgesehen ist. An dieser Anlagestelle ist im Magnetanker ein Dichtelement und am Entlüftungssitz ein umlaufender Wulst ausgebildet, so daß an der ersten Position ein dichtender Ventilsitz vorliegt. Bei Bestromung des Magnetventils wird der Magnetanker mit Magnetkraft gegen die Kraft der Feder an eine zweite Position gegen den Magnetanker geschoben, an der ein im Anker ausgebildeter umlaufender Wulst zur Anlage gegen den Magnetkern dient, wobei im Magnetanker eine Durchgangsbohrung zu einem Einlaßanschluß eingebracht ist. Durch die Anlage an der zweiten Position wird ein Metall-Metall-Dichtsitz realisiert, der jedoch kleine Leckströme zuläßt.

Der Erfindung liegt deshalb die Aufgabe zugrunde, die Herstellkosten für die Vorsteuereinheit eines Bremsdruckmodulators zu reduzieren.

Diese Aufgabe wird durch die im Patentanspruch 1 angegebene Erfindung gelöst. Weiterbildungen und vorteilhafte Ausführungsbeispiele sind in den Unteransprüchen angegeben.

Bei der bekannten erstgenannten Schrift werden anhand verschiedener Ausführungsbeispiele Anregungen für Einsparungen durch Reduzierung der Anzahl von Magnetventilen und der in diesem Zusammenhang möglichen Einsparung von Pneumatik-Leitungen und ähnlichen Komponenten gemacht. Die Erfindung löst sich von der Vorstellung, daß die Anzahl der Magnetventile als solche weitgehend maßgeblich ist [die unten erläuterte Anzahl von 3 Magnetventilen pro Kanal bei der Erfindung liegt sogar leicht über der Anzahl von 2,5 Magnetventilen pro Kanal in Fig. 2 der bekannten Schrift] und legt den Schwerpunkt auf die Ventilkonstruktion als solche und auf eine pneumatische Schaltung, mit der Magnetventile dieser Ventilkonstruktion optimal zu betreiben sind.

Die Erfindung hat den Vorteil, daß die Vorsteuereinheit für einen Druckregelkreis über drei sehr ähnlich aufgebaute 2/2-Wege-Magnetventile verfügt.

Im Gegensatz zu der bekannten erstgenannten Schrift, bei der ein 3/2-Wege-Magnetventil [dort (9')] als Umschaltventil verwendet wird, welches durch den konstruktiven Aufbau von 3/2-Wege-Magnetventilen in ihrer üblichen Bauform mit 2 Dichtsitzen, wie er unten erläutert ist, zu einem Geschwindigkeitsnachteil führt, der sich in einer verringerten Taktrate äußert, weist die Erfindung den Vorteil eines verbesserten Zeitverhaltens auf.

Aufgrund der Ähnlichkeit der 2/2-Wege-Magnetventile werden entsprechend einer Weiterbildung der Erfindung die Magnetanker und die Magnetspulen vereinheitlicht und durch die Verwendung gleichartiger, in größerer Stückzahl gefertigter Magnetanker werden die Kosten verringert.

Dadurch lassen sich auch die drei 2/2-Wege-Magnetventile einer Druckregelkreis-Vorsteuereinheit kombinieren.und es lassen sich aufgrund einer anderen Weiterbildung der Erfindung die nun baugleichen Magnetspulen inklusive der Magnetanker zu der kompakten Baugruppe einer 3-fach-Magnetspulen-Einheit zusammenfassen, die entsprechend einer wiederum anderen Weiterbildung der Erfindung gemeinsam umspritzbar ist und als vormontierte Einheit zur Integration mit der Elektronik des Bremsdruckmodulators zur Verfügung steht. Entsprechend einer weiteren Weiterbildung erfolgt in vorteilhafter Weise bei dieser Integration eine Kontaktierung der Magnetspulen-Baugruppe mit der Elektronik durch einfache Steckung.

Eine andere Weiterbildung der Erfindung hat den Vorteil, daß durch die Wahl von metallisch dichtenden Dichtsitzen für den bestromten Zustand der Magnetventile die Magnetanker besonders platzsparend zu gestalten sind. Die Verwendung solcher Dichtsitze ist durch eine speziell ausgebildete pneumatische Schaltungstechnik möglich.

Die Erfindung wird im folgenden anhand eines Ausführungsbeispiels, das in der Zeichnungen dargestellt ist, näher erläutert.

Es zeigt:
- Fig. 1: die pneumatische Schaltung der Vorsteuereinheit für einen Bremsregelkreis des Bremsdruckmodulators mit dem am pneumatischen Ausgang der Vorsteuereinheit angeschlossenen luftmengenverstärkenden Relaisventil;
- Fig. 2: das Blockschaltbild für einen Bremsdruckmodulator mit einer Vorsteuereinheit nach Fig. 1;
- Fig. 3: die Ventilkonstruktion für eine Vorsteuereinheit nach Fig. 1;
- Fig. 4: die Ausführung der Magnetanker und die Art des Einbaus in eine Magnetspule zur Bildung eines hermetisch dichtenden Ventilsitzes für den nicht bestromtem Magneten und eines nicht hermetisch dichtenden Metall-Metall-Ventilsitzes für den bestromtem Magneten;
- Fig. 5: die Vorsteuereinheit nach Fig. 1 in Form einer 3-fach-Magnetspulen-Einheit, die als eine mit Kunststoff umspritzte Einbau-Einheit ausgeführt ist;
- Fig. 6: die Vorsteuereinheit als Einbau-Einheit nach Fig. 4 mit der elektrischen Verbindung zur Elektronik-Platine der elektronischen Steuereinrichtung.

Ein elektronisch geregeltes Bremssystem [EBS] für Anhängerfahrzeuge verfügt über mehrere unabhängig voneinander arbeitende Bremsregelkreise für die Radbremsen des Fahrzeugs [mehrkanaliges System]. Ein Bremsregelkreis, der einen Druckregelkanal für eine Radbremse darstellt, besteht aus einer Vorsteuereinheit, die aus Magnetventilen aufgebaut ist, aus einem luftmengenverstärkenden Relaisventil, aus mindestens einem Bremszylinder für die Radbremsen, einem an einer geeigneten Stelle angebrachten Bremsdrucksensor und aus einer elektronischen Steuereinrichtung, welche die Bremsdruckregelung durchführt.

Die Bremsregelkreise für die unterschiedlichen Kanäle des mehrkreisigen Systems sind gleichartig aufgebaut, so daß mit der Beschreibung eines Bremsregelkreises die anderen Bremsregelkreise ebenfalls beschrieben sind. Dem Ausführungsbeispiel wird daher die Konfiguration einer Basisvariante für Anhänger-EBS-Systeme zugrundegelegt, welche aus einem Sattelauflieger mit zwei Achsen besteht, es handelt sich hier um ein 4S/2M-System [vier ABS-Sensoren für vier Räder und zwei Modulatorkanäle für die Radbremsen der linken bzw. der rechten Seite]; die Bremsdruckregelung wird also seitenweise durchgeführt.

Das EBS-Anhängerfahrzeug ist mit einem EBS-Zugfahrzeug über eine elektrische und über eine pneumatische Schnittstelle verbunden. Die elektrische Schnittstelle besteht aus der digitalen Datenschnittstelle nach ISO 1199-2; die pneumatische Schnittstelle besteht aus erstens der Vorratsleitung, die den Anhänger mit Druckluft versorgt und zweitens der Bremsleitung, die in dem Anhänger mit einem Anhängerbremsventil verbunden ist. Das Anhängerbremsventil steuert an seinem pneumatischen Ausgang einen Bremsdruck aus, der von dem auf der pneumatischen Bremsleitung übertragenen Bremsdruck abgeleitet ist und diesem entspricht.

Auf der Seite des EBS-Zugfahrzeuges sind die Vorrats- und die Bremsleitung an ein Anhängersteuerventil angeschlossen. Im Zusammenwirken von Anhängersteuer- und Anhängerbremsventil ist die Abriß-Sicherung realisiert, wie sie von konventionell gebremsten Fahrzeugzügen [Zügfahrzeug-Anhängerfahrzeug] bekannt ist; bei einem derartigen Abriß wird in der bekannten Art und Weise vom Anhängerbremsventil ebenfalls ein Bremsdruck ausgesteuert.

Da, wie erläutert, die Abriß-Sicherung in gleicher Weise wie bei konventionell gebremsten Fahrzeugen realisiert ist, kann das EBS-Anhängerfahrzeug auch hinter einem Zugfahrzeug mit konventioneller Bremsanlage betrieben werden. Das Anhängerbremsventil im EBS-Anhängerfahrzeug enthält so auch die erforderlichen Funktionen eines herkömmlichen Anhängerbremsventiles in konventionellen Bremsanlagen wie Abrißfunktion und Rückschlagventil.

Im EBS-Anhängerfahrzeug dient der vom Anhängerbremsventil ausgesteuerte Druck zur pneumatisch redundanten Bremsung im Falle eines EBS-Ausfalls; außerdem dient er unter Verwendung eines im Anhängerbremsventil angeordneten Drucksensors zur Ermittlung des elektrischen Sollwertes für den Fall, daß der EBS-Anhänger an einem konventionellen Zugfahrzeug, d. h. an einem Nicht-EBS-Zugfahrzeug betrieben wird. Dieser ausgesteuerte Druck stellt den Redundanzdruck dar.

In Fig. 2, dem Blockschaltbild für den Bremsdruckmodulator sind die Vorsteuereinheit (1) und die Funktionseinheiten, mit denen die Vorsteuereinheit zusammenwirkt, nämlich die elektronische Steuereinheit (3) und das luftmengenverstärkende Relaisventil (2), dargestellt.

Die Vorsteuereinheit (1) verfügt über einen ersten pneumatischen Eingang (4), der mit dem Versorgungsdruck verbunden ist und über einen zweiten pneumatischen Eingang (5), der mit dem pneumatischen Ausgang des nicht dargestellten Anhängerbremsventiles zur Übertragung des Redundanzdruckes verbunden ist. Ein pneumatischer Ausgang (6) der Vorsteuereinheit (1) ist mit dem Eingang (17) des Relaisventiles (2) verbunden.

Die elektrische Schnittstelle ist über eine Leitung (20) mit der elektrischen Steuereinheit (3) zur Übertragung der elektrischen Bremswertvorgabe verbunden und es sind ausgehend von der elektronischen Steuereinheit (3) elektrische Steuerleitungen (19) für die Magnetventile der Vorsteuereinheit (1) vorgesehen.

Der pneumatische Ausgang (18) des Relaisventiles (2) ist mit den nicht dargestellten Bremszylindern für diesen Bremsregelkreis verbunden.

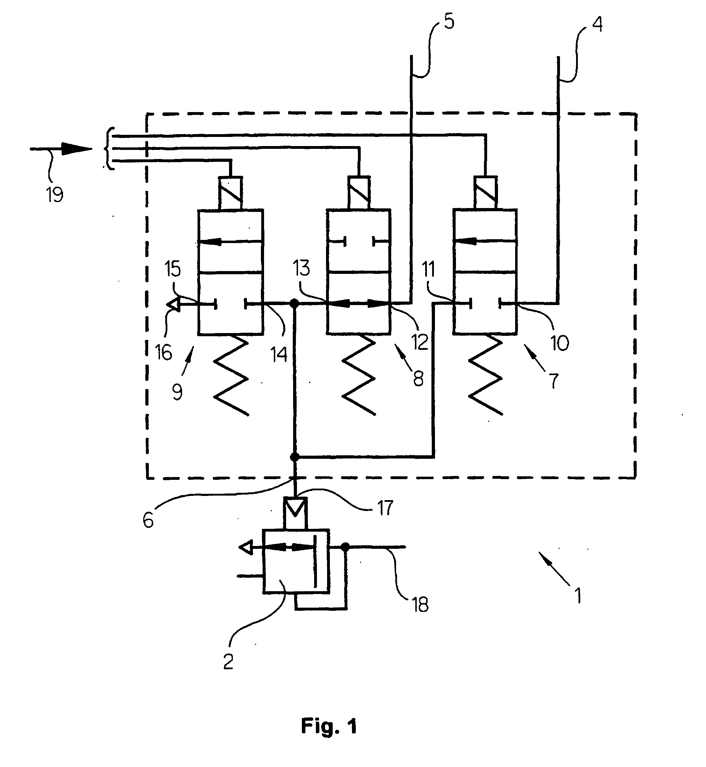

Entsprechend Fig. 1 sind in der Vorsteuereinheit (1) drei Magnetventile vorgesehen; ein erstes Magnetventil (7) verfügt über einen ersten Anschluß (10) und einen zweiten Anschluß (11), ein zweites Magnetventil (8) verfügt über einen ersten Anschluß (12) und einen zweiten Anschluß (13) und ein drittes Magnetventil (9) verfügt über einen ersten Anschluß (14) und einen zweiten Anschluß (15).

Der erste Anschluß (10) des ersten Magnetventiles (7) ist mit dem ersten pneumatischen Eingang (4) der Vorsteuereinheit (1) verbunden, der erste Anschluß (12) des zweiten Magnetventiles (8) ist mit dem zweiten pneumatischen Eingang der Vorsteuereinheit (1) verbunden, der zweite Anschluß (11) des ersten Magnetventiles (7) ist mit dem pneumatischen Ausgang (6) der Vorsteuereinheit (1) verbunden, der zweite Anschluß (13) des zweiten Magnetventils (8) ist mit dem ersten Anschluß (14) des dritten Magnetventiles (9) und dem pneumatischen Ausgang (6) der Vorsteuereinheit (1) verbunden und der zweite Ausgang (15) des dritten Magnetventiles (9) ist mit einer Drucksenke (16) verbunden.

Das erste Magnetventil (7) und das dritte Magnetventil (9) sind als stromlos geschlossene 2/2-Wege-Magnetventile ausgestaltet, während das zweite Magnetventil (8) als stromlos offenes 2/2-Wege-Magnetventil ausgebildet ist.

Die Magnetventile (7), (8), (9), der Vorsteuereinheit (1) dienen zur Festlegung des Druckes in der Steuerkammer des Relaisventiles (2); sie sind in taktender Betriebsweise zu betreiben.

Das zweite Magnetventil (8) dient zur Übertragung des Redundanzdruckes in die Steuerkammer des Relaisventiles (2), im stromlos offenen Zustand folgt der Steuerkammer-Druck, wenn die anderen Magnetventile (7) und (9) nicht betätigt sind, dem am zweiten pneumatischen Eingang (5) der Vorsteuereinheit (1) angelegten Redundanzdruck; dieses Redundanzdruck-Ventil dient also sowohl als Belüftungs- als auch als Entlüftungsventil für den Steuerkammer-Druck. Im stromlos geschlossenen Zustand trennt das zweite Magnetventil (8) den Redundanzdruck von der Steuerkammer des Relaisventiles (2) ab.

Das erste Magnetventil (7) ist durch seine Verbindung mit dem Vorratsdruck als Belüftungs- und das dritte Magnetventil (9) ist durch seine Verbindung mit der Drucksenke als Entlüftungs-Ventil für die Steuerkammer des Relaisventiles (2) vorgesehen.

Die Magnetventile (7), (8) und (9) sind im Gegensatz zur Reihenschaltung von Ventilen nach der eingangs genannten Schrift parallel zueinander geschaltet, wodurch sie auch gleichzeitig betätigt werden können.

So kann z. B. bei einer Vollbremsung, bei der das Belüftungs-Ventil (7) zur Druckerhöhung betätigt wird, das Redundanzdruck-Ventil (8) gleichzeitig in seiner nicht betätigten Stellung verharren: Der während der Vollbremsung ansteigende Redundanzdruck unterstützt die Belüftung der Steuerkammer des Relaisventiles (2), wodurch die Druckaufbauzeit verkürzt wird. Ebenfalls kann während einer Bremsbetätigungs-Rücknahme zusätzlich zur Betätigung des Entlüftungsventiles (9) das Redundanzventil (8) im unbetätigten Zustand verbleiben, wodurch die Zeit für den Druckabbau des Steuerkammer-Druckes im Relaisventil (2) ebenfalls verkürzt wird.

Durch die unten erläuterte Gleichheit der Magnetspulen und Ventilanker der Magnetventile (7), (8) und (9) weisen diese Ventile ein gleichartiges Schaltverhalten auf, wodurch ein gewünschtes Zeitverhalten von Druckauf- und Druckabbau im Steuerraum des Relaisventiles (2) durch die Wahl von geeigneten Taktzeiten für die Magnetventile sehr übersichtlich zu gestalten ist.

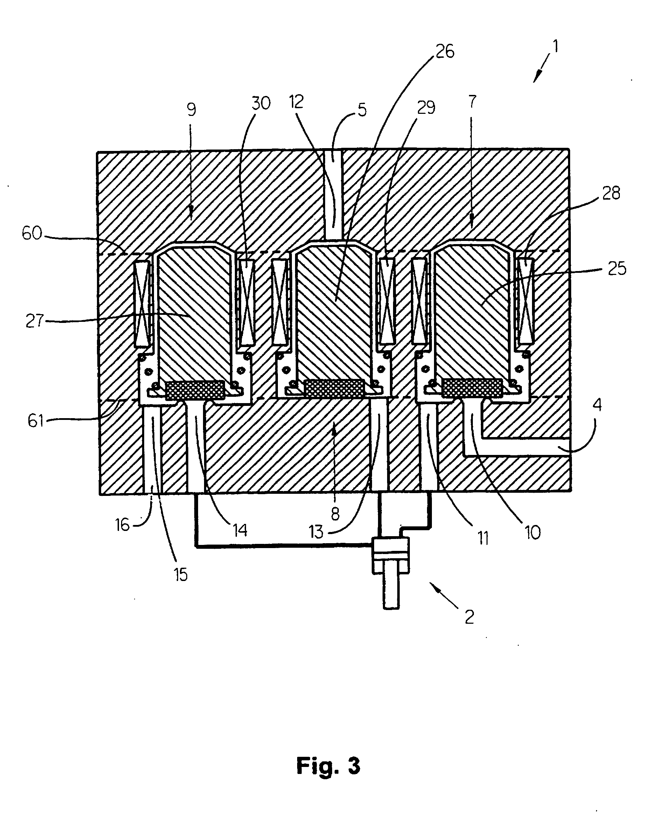

In Fig. 3 ist die Konstruktion der Magnet-Ventile in einem Ventilblock mit ihrer Verrohrung dargestellt. Der Magnetanker (25) des Magnetventiles (7) ist baugleich zu dem Magnetanker (26) des Magnetventiles (8) und zu dem Magnetanker (27) des Magnetventiles (9) aufgebaut; die Magnetspule (28) des Magnetventiles (7) ist ebenfalls baugleich zu der Magnetspule (29) des Magnetventiles (8) und zu der Magnetspule (30) des Magnetventiles (9) aufgebaut. Bezüglich der Darstellung der Verrohrung sei angemerkt, daß entsprechend der vorstehenden Erläuterungen die Zusammenschaltung der Anschlüsse (11), (13) und (14) den pneumatischen Ausgang (6) der Vorsteuereinheit (1) darstellt.

Die Magnetspulen enthalten magnetflußbündelnde ferromagnetische Joche, die in geeigneter Weise die Magnetkraft erhöhen. Im Gehäuse des Ventilblockes, in welches die Magnetspulen eingebaut sind, befinden sich ebenfalls magnetflußbündelnde Elemente, die magnetkraftverstärkend wirken und die in geeigneter Form, z. B. aus ferromagnetischem Materialien hergestellt sind. Aus Vereinfachungsgründen zur besseren Übersicht sind die magnetflußbündelnden Elemente als Bestandteil des Ventilblock-Gehäuses bzw. der Magnetspulen (28), (29), (30) nicht dargestellt.

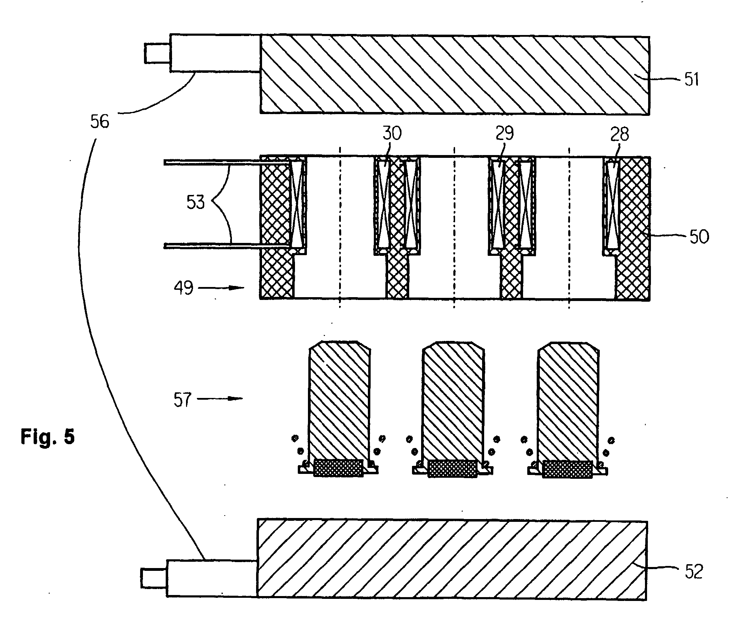

In Fig. 3 sind für den Ventilblock weiter in jeweils gestrichelter Form eine erste Trennfuge (60) und eine zweite Trennfuge (61) angedeutet. Die erste Trennfuge dient zur Abtrennung eines ersten Anschlußteils (51) vom Ventilblock und die zweite Trennfuge dient zur Abtrennung eines zweiten Anschlußteils (52), so daß zwischen den Trennfugen eine 3-fach-Magnetspulen-Einheit gebildet ist; dies stellt eine Ausbildung der Erfindung dar, die im Zusammenhang mit den Erläuterungen zu Fig. 5 beschrieben ist.

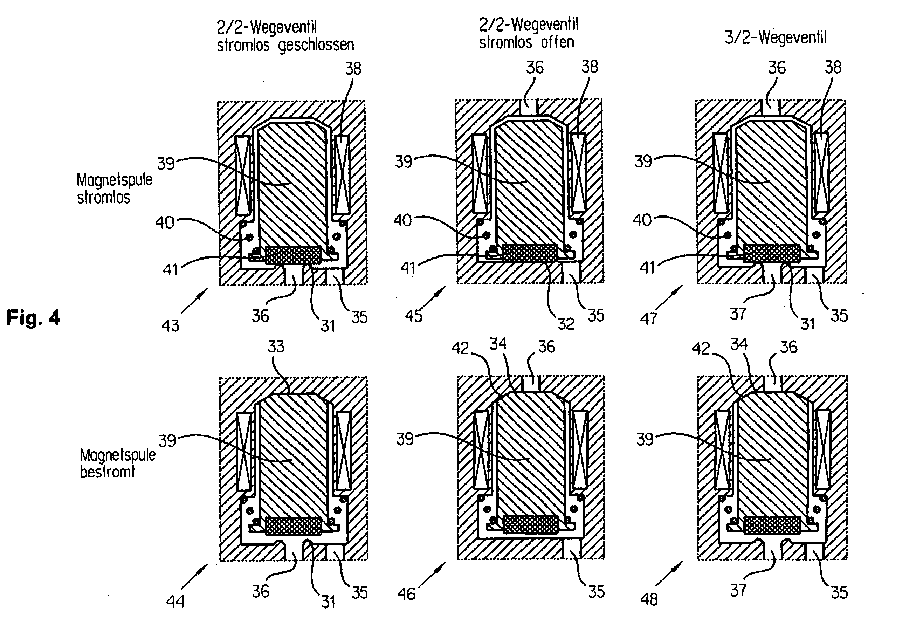

In Fig. 4 ist gezeigt, wie unter Verwendung gleichartiger Magnetanker Magnetventile mit unterschiedlicher Funktion realisiert werden können. Die Bezugszeichen sind für die einzelnen Ventilvarianten einheitlich gewählt, so daß sie von einer Ventilkonstruktion zu einer anderen Ventilkonstruktion direkt übertragbar sind.

Unter dem Bezugszeichen (43) ist ein stromlos geschlossenes 2/2-Wege-Magnetventil in der Stellung der stromlosen Magnetspule (38) angegeben. Da in dieser Stellung keine Magnetkraft wirkt, wird der Magnetanker (39) durch die Wirkung der Magnetanker-Rückstellfeder (40) bis zu einer Hubbegrenzung (31) verschoben, bei der an dieser Stelle ein Dichtsitz vorgesehen ist. Der Elastomereinsatz (41) kommt zur Anlage mit dem Dichtsitz (31) und der erste Anschluß (35) ist hermetisch gegenüber dem zweiten Anschluß (36) abgedichtet.

Unter dem Bezugszeichen (44) ist das stromlos geschlossene 2/2-Wege-Magnetventil in dem Zustand der bestromten Magnetspule (38) gezeichnet. Der Magnetanker (39) kommt an einer durch die Magnetkraft bedingten Hubbegrenzung (33) zur Anlage, der Ventilsitz öffnet, und der erste Anschluß (35) ist mit dem zweiten Anschluß (36) verbunden.

Die nächste Ventil-Variante stellt ein stromlos offenes 2/2-Wege-Magnetventil dar, das unter dem Bezugszeichen (45) im stromlosen Schaltzustand gezeichnet ist. Über die Wirkung der Magnetanker-Rückstellfeder (40) kommt der Magnetanker an einer Hubbegrenzung (32) zur Anlage, die jedoch in diesem Fall nicht mit einem Dichtsitz ausgestaltet ist. In dieser Schaltstellung ist der erste Anschluß (35) mit dem zweiten Anschluß (36) verbunden.

Das stromlos offene 2/2-Wege-Magnetventil ist unter dem Bezugszeichen (46) im bestromten Schaltzustand gezeichnet. Der Magnetanker (39) kommt an einer Hubbegrenzung (34) zur Anlage und bildet an dieser Stelle durch die Ausformung (42) des Magnetankers mit dem zweiten Anschluß (36) einen Metall-Metall-Ventil: Der erste Anschluß (35) ist von dem zweiten Anschluß (36) abgetrennt. Der Metall-Metall-Ventilsitz ist im Gegensatz zum oben erläuterten Ventilsitz unter Verwendung des Elastomer-Einsatzes (41) nicht hermetisch dichtend, d. h. es treten Leckagen auf. Wie unten erläutert, ist die Schaltungstechnik für den Einsatz dieses Ventils derart gewählt, daß diese Leckagen ohne Bedeutung sind.

Obgleich ein derartiges Ventil bei der Vorsteuereinheit nicht benötigt wird, ist der Vollständigkeit halber unter den Bezugszeichen (47), (48) gezeigt, daß unter Verwendung des Magnetankers (39) auch ein 3/2-Wege-Magnetventil aufgebaut werden kann.

Unter dem Bezugszeichen (47) ist das 3/2-Wege-Magnetventil für den Schaltzustand der stromlosen Magnetspule (38) gezeichnet: Über die Wirkung der Magnetanker-Rückstellfeder kommt der Magnetanker (39) an der Hubbegrenzung (31) mit Dichtsitz zur Anlage. Über diesen Ventilsitz ist der erste Anschluß (35) gegenüber dem dritten Anschluß (37) abgetrennt, jedoch besteht eine Verbindung des ersten Anschlusses (35) zum zweiten Anschluß (36).

Unter dem Bezugszeichen (48) ist das 3/2-Wege-Magnetventil im bestromten Schaltzustand gezeichnet. Durch die Magnetkraft kommt der Anker an der Hubbegrenzung (34) mit dem zweiten Anschluß (36) zur Anlage und bildet mit der Ausformung (42) einen Metall-Metall-Dichtsitz. Hierdurch ist der erste Anschluß (35) vom zweiten Anschluß (36) abgetrennt, jedoch ist der erste Anschluß (35) mit dem dritten Anschluß (37) verbunden.

Beim Vergleich der pneumatischen Schaltung nach Fig. 1 mit der Ventilkonstruktion nach Fig. 3 ist gezeigt, daß für den Ruhezustand der Vorsteuereinheit, welcher durch den stromlosen Schaltzustand aller drei Magnetventile (7), (8) und (9) gegeben ist, durch die Wirkung der Magnetanker-Rückstellfedern nur hermetisch dichtende Ventilsitze im Einsatz sind: Die Magnetventile (7) und (9) sind geschlossen und das Magnetventil (8) ist geöffnet.

Erst bei einer gewünschten Veränderung des Steuerkammer-Druckes im Relaisventil (2) werden zur Druckerhöhung das Belüftungsventil (7) und zur Druckverringerung das Entlüftungsventil (9) jeweils in taktender Betriebsweise betätigt.

Wenn bei dieser Druckerhöhung bzw. Druckverringerung der Einfluß des Redundanzdruckes ausgeschaltet werden soll [die oben erläuterte Unterstützung der Be- oder Entlüftung der Relaisventil-Steuerkammer durch den ansteigenden bzw. abfallenden Redundanzdruck soll in diesem Fall nicht stattfinden], so wird das Redundanzdruckventil (8) betätigt und der am zweiten pneumatischen Eingang (5) anliegende Redundanzdruck wird über den in diesem Schaltzustand wirkenden Metall-Metall-Ventilsitz von der Relaisventil-Steuerkammer [pneumatischer Ausgang (6)] abgetrennt.

Da, wie vorstehend erwähnt, an diesem Ventilsitz Leckagen auftreten können, ist die Abtrennung nicht hermetisch, d. h. der vorliegende Redundanzdruck wird durch die Ventilsitz-Leckage den Steuerkammer-Druck im Relaisventil (2) in sehr geringem Maße beeinflussen. Dieser Einfluß ist jedoch unerheblich, da, wie erläutert, zur gleichen Zeit eine taktende Belüftung durch das Belüftungsventil (7) oder eine taktende Entlüftung über das Entlüftungsventil (9) stattfindet, wobei die jeweils vollen Querschnitte dieser Ventile wirksam sind. Der Leckagequerschnitt ist einerseits schon außerordentlich klein gegenüber den Ventilquerschnitten und andererseits wird ein Takten im geschlossenen Regelkreis durchgeführt, und zwar derart, daß solange auf- bzw. abgetaktet wird, bis der am pneumatischen Ausgang (18) des Relaisventiles (2) ausgegebene Bremsdruck einem von der elektronischen Steuereinheit berechneten Bremsdruck-Sollwert entspricht [der Berechnung des Bremsdruck-Sollwertes in der elektronischen Steuereinheit liegen neben der elektrischen Bremswertvorgabe durch die elektrische Schnittstelle, welche die Hauptvorgabe darstellt, weitere Einflußfaktoren durch die Beladung oder die ABS-Bremsregelung zugrunde]. Mit dem Erreichen des Bremsdruck-Sollwertes ist das Takten beendet und die Magnetventile (7) und (9) befinden sich wieder in ihrem stromlosen Schaltzustand; das Redundanzventil (8) bleibt weiter betätigt. Sollte es jetzt durch den Metall-Metall-Ventilsitz zu einer geringen Entlüftung der Steuerkammer des Relaisventiles (2) kommen, die durch eine Absenkung des Druckes am pneumatischen Ausgang (18) erkennbar wird, so wird im Rahmen der Druckregelung diese Absenkung durch ein einmaliges Takten des Belüftungsventiles (7) wieder kompensiert.

Beim Schließen eines Ventilsitzes über die Magnetkraft wird nach dem Beginn der Strombeaufschlagung der Magnetspule durch die räumliche Entfernung vom Magnetanker und Ventilsitz [der Eisenkreis ist nicht geschlossen] zunächst nur ein geringer magnetischer Kraftfluß aufgebaut. Um den Magnetanker überhaupt in Bewegung zu setzen, muß durch einen großen Strom eine hohe Betätigungskraft erzeugt werden, die nur einen Bruchteil der späteren Haltekraft für den Anker ausmacht. Durch die ständige Kraftbeaufschlagung in großer Höhe wird der Magnetanker eines Magnetventiles beschleunigt und baut damit kinetische Energie auf, die beim Auftreffen des Ankers am Ventilsitz wieder vernichtet wird.

Bei den üblichen Ventilen nach dem Stand der Technik wird die Dichtung am Ventilsitz durch einen Elastomer-Einsatz im Magnetanker hergestellt.

Damit die Vernichtung der kinetischen Beschleunigungsenergie des Ankers beim Auftreffen auf den Ventilsitz im Rahmen einer Dauerbelastung nicht zur Zerstörung des Elastomers führt, ist ein solcher Elastomer-Einsatz nicht starr sondern federnd mit dem Körper des Ankers verbunden. In der DE-A1-27 57 803 ist unter der dortigen Fig. 4 ein Magnetanker mit zwei Elastomer-Dichteinsätzen [dort (50'), (52')] für zwei Ventilsitze gezeigt, welche federnd gelagert sind [dort Federn (51), (53)]. Ein federnder Dichtsitz nach dieser Bauweise bedingt, damit die Federung überhaupt wirksam werden kann, einen relativ großen Ventilhub, der z. B. 1,2 mm beträgt. Eine derartige Konstruktion bewirkt auch eine bestimmte minimale Baugröße, damit eine federnde Konstruktion unterzubringen ist, was zu einer relativ großen Ankermasse führt, und dies bedingt wiederum eine entsprechende Verstärkung der Anker-Rückstellfeder. Die stärkere Rückstellfeder führt dann zu einer Erhöhung der erforderlichen Magnetkraft, die bei einer derartiger Ventilsitz-Konstruktion bei ca. 30 N liegt. Die Schaltzeit [Strombeaufschlagung der Magnetspule bis zum Schließen des Ventilsitzes] ist im wesentlichen durch die Zeit für den Stromaufbau in der Magnetspule gegeben und liegt typischerweise in der Größenordnung von 25 ms.

In einem Einsatz für Vorsteuerungen muß man diese Ventile üblicherweise mit einer Nennweite von ca. 2,2 mm ausstatten, um zu vermeiden, daß durch die Druckluft-Pilotleitungen, die die räumliche Entfernung eines Ventiles zu der drucksummierenden Relaisventil-Steuerkammer überbrücken, ein großer Druckabfall entsteht.

Beim Betrieb derartiger Vorsteuerventile in einem geschlossenen Druckregelkreis führt die Nennweite von ca. 2,2 mm dazu, daß der ausgesteuerte Druck nicht sehr feinfühlig abstufbar ist und die Schaltzeit von ca. 25 ms führt im Betrieb mit einem üblichen Abtastregler zu einer Begrenzung des realisierbaren Druckgradienten für den ausgesteuerten Druck.

Bei der Ventilkonstruktion nach der Erfindung kann dadurch, daß die Magnetanker nicht an zwei, sondern nur an einem Ende über einen Elastomer-Einsatz verfügen, und daß an dem diesem gegenüberliegenden Ende nur eine Ausformung zur Bildung eines Metall-Metall-Dichtsitzes vorhanden ist, eine kleine Bauweise gewählt werden. Dadurch wird die Masse des Magnetankers auf ca. 6 g reduziert und aufgrund der nur schwach ausgelegten Anker-Rückstellfeder ist eine Magnetkraft von nur ca. 6 N erforderlich.

Die Beschleunigungsfestigkeit der Ausformung am metallisch dichtenden Sitz wird dadurch gewährleistet, daß sie mit einer Beschichtung versehen ist, wie dies in der DE-A1-197 30 276 angegeben ist.

Dadurch, daß bei einem Metall-Metall-Dichtsitz das Dichten nicht durch "Elastomer-Eindrücken" erfolgt und kein Federweg erforderlich wird, kann ein sehr kleiner Ventilhub von ca. 0,5 mm gewählt werden. Mit diesem kleinen Ventilhub und der ohnehin schwach ausgelegten Anker-Rückstellfeder erübrigt sich auch eine federnde Lagerung des Elastomer-Einsatzes, wie dies beim obengenannten Stand der Technik der Fall ist.

Mit dem kleinen Magnetanker ergibt sich auch eine kleine Magnetspule und durch diese kleinen räumlichen Abmessungen ist es dann wie unten erläutert möglich, eine 3-fach-Magnetspulen-Einheit vorzusehen, in der die Magnetanker inklusive der Rückstellfedern integriert werden. Diese räumlich kleine Baugruppe erlaubt dann auch, für die Verrohrung zu dem Relaisventil (2) kurze Bohrungen vorzusehen, die die Druckluft nicht unzulässig drosseln.

Durch diese optimierten Druckluftverbindungen kann die Nennweite eines Magnetventiles auf einen Wert um 1,7 mm reduziert werden, was einen optimalen Wert für ein Pilotventil in Fahrzeug-Anwendungen darstellt: Er gewährleistet einerseits eine gute Stufbarkeit für den ausgesteuerten Bremsdruck und er ist andererseits nicht so klein, daß die üblichen Verschmutzungen von Druckluft in Fahrzeugen schon eine Rolle spielen.

Mit den erläuterten Maßnahmen lassen sich die Schaltzeiten für die Magnetventile auf ca. 6 ms reduzieren. Mit den reduzierten Schaltzeiten können sich schnell ändernde Sollwertvorgaben für den Bremsdruckregler realisiert werden und am Ausgang (18) des Relaisventiles (2) sind hohe Gradienten für den ausgesteuerten Bremsdruck realisierbar.

Eine vorteilhafte Weiterbildung der Konstruktion der Magnetventile nach Fig. 3 ist in Fig. 5 angegeben. Die Magnetspulen (28), (29) und (30) für die Magnetventile (7), (8) und (9) lassen sich aufgrund ihrer identischen Bauform zu der kompakten 3-fach-Magnetspulen-Einheit (49) zusammenfassen, die zur Stabilisierung mit einem Kunststoff (50) umspritzt ist.

Zur Montage der Vorsteuereinheit werden die unter dem Bezugszeichen (57) angedeuteten Magnetanker inklusive der Magnetanker-Rückstellfedern eingeschoben und die Baugruppe der 3-fach-Magnetspulen-Einheit (49) inklusive der Magnetanker wird zu der kompletten Vorsteuereinheit erweitert, indem an den jeweiligen Stirnseiten der 3-fach-Magnetspulen-Einheit (49) das erste Anschlußteil (51) und das zweite Anschlußteil (52) hinzugefügt werden, und beide Anschlußteile dann mit der 3-fach-Magnetspulen-Einheit in geeigneter Weise dichtend verbunden werden.

Die Anschlußteile (51) und (52) enthalten Bohrungen, wie sie in Fig. 3 für die Verrohrung der Magnetventile (7), (8) und (9) beschrieben sind [sie sind der Übersichtlichkeit halber in Fig. 5 selbst nicht dargestellt], so daß mit der Herstellung der dichtenden Verbindungen die gesamte Vorsteuereinheit einbaufertig hergestellt ist.

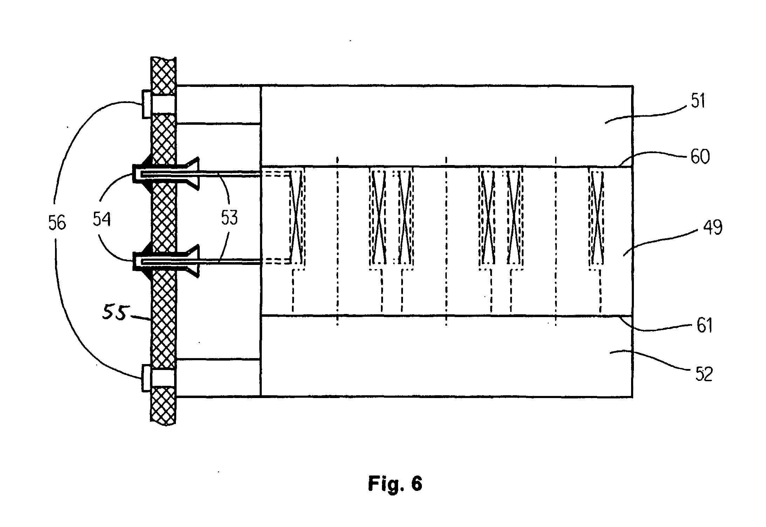

Wie in Fig. 6 dargestellt ist es in vorteilhafter Weise möglich, die Anschlüsse (53) für die Magnetspulen aus der 3-fach-Magnetspulen-Einheit (49) als Kontaktstifte herauszuführen und in entsprechende Aufnahmebuchsen (54) in der elektronischen Platine (55) für die elektronische Steuerung (3) einzustecken.

Nach dem Einstecken kann die Platine (55) über geeignete Befestigungsmittel (56) als Komponente fixiert werden. Damit wird eine elektronisch-pneumatische Baugruppe gebildet, die die Vorsteuereinheit und die elektronische Steuereinheit umfaßt; diese Baugruppe muß dann lediglich mit größeren Teilen wie den Relaisventilen baulich vereinigt werden, um den Anhänger-Bremsdruckmodulator an der 3-fach-Magnetspulen-Einheit (49) fertigzustellen.

## Patentansprüche

1. Vorsteuereinheit (1) für einen, in einem an ein Zugfahrzeug gekoppelten Anhänger vorgesehenen, Bremsdruckmodulator für mindestens einen Druckregelkreis einer elektronischen Bremsanlage, mit folgenden Merkmalen:
a) Es ist ein erster pneumatischer Eingang (4) vorgesehen, der mit dem Versorgungsdruck verbunden ist;
b) es ist ein zweiter pneumatischer Eingang (5) vorgesehen, der mit dem Ausgang einer Ventileinrichtung verbunden ist, die einen Redundanzdruck zur Verfügung stellt, welcher von dem Bremsdruck abgeleitet ist, der von dem Zugfahrzeug zu dem Anhänger über pneumatische Verbindungen übertragen ist;
c) es ist ein pneumatischer Ausgang (6) vorgesehen, der mit einer luftmengenverstärkenden Ventileinrichtung (2) verbunden ist;
d) die Vorsteuereinheit ist aus elektrisch ansteuerbaren Ventileinrichtungen (7, 8, 9) aufgebaut, deren pneumatische Anschlüsse (10, 11, 12, 13, 14, 15) in bestimmter Weise miteinander verschaltet sind und deren elektrische Anschlüsse (19) mit Ausgängen einer elektronischen Steuereinrichtung (3) verbunden sind;
e) als Ventileinrichtungen sind drei 2/2-Wege-Magnetventile (7, 8, 9) mit je einem ersten (10, 12, 14) und einem zweiten (11, 13, 15) pneumatischen Anschluß vorgesehen;
f) die 2/2-Wege-Magnetventile (7, 8, 9) verfügen jeweils über eine Magnetspule (28, 29, 30, 38) und einen Magnetanker (25, 26, 27, 39) und sind in taktender Betriebsweise zu betreiben;
g) sowohl jeweils die Magnetanker (25, 26, 27, 39) als auch jeweils die Magnetspulen (28, 29, 30, 38) sind baugleich ausgeführt.

2. Vorsteuereinheit nach Anspruch 1, **gekennzeichnet durch** die folgenden Merkmale:
a) Bei stromloser Magnetspule (38) ist für einen Magnetanker (39) in einem Ventilgehäuse, das dem entsprechenden Magnetventil zugeordnet ist, eine erste Hubbegrenzung (31) vorgesehen, die **durch** die Wirkung einer Magnetanker-Rückstellfeder (40) eingenommen ist;
b) bei bestromter Magnetspule (38) ist für einen Magnetanker (39) in dem Ventilgehäuse des entsprechenden Magnetventiles eine zweite Hubbegrenzung (34) vorgesehen, die **durch** die Wirkung der auf den Anker (39) wirkenden Magnetkraft eingenommen ist;
c) ein Magnetanker (38) ist an derjenigen Begrenzungsfläche, die an der ersten Hubbegrenzung (31) zur Anlage kommt, mit einem nicht federbelasteten Elastomer-Einsatz (41) zur Bildung des hermetisch dichtenden Dichtsitzes versehen;
d) ein Magnetanker (38) ist an derjenigen Begrenzungsfläche, die an der zweiten Hubbegrenzung (34) zur Anlage kommt mit einer Ausformung (42) versehen, die zur Bildung eines nicht hermetisch dichtenden Metall-Metall-Dichtsitzes vorgesehen ist;
e) die Magnetanker (38) sind in einer kleinen Bauweise mit einer auf ca. 6 g reduzierten Masse ausgeführt;
f) die Magnetanker (38) sind mit einer Beschichtung versehen.

3. Vorsteuereinheit nach mindestens einem der vorstehenden Ansprüche 1 oder 2, **gekennzeichnet durch** die folgenden Merkmale:
a) die Magnetspulen (28, 29, 30) für die drei Magnetventile (7, 8, 9) sind als 3-fach-Magnetspulen-Einheit (49) ausgeführt;
b) die 3-fach-Magnetspulen-Einheit (49) ist als kompakte, mit Kunststoff umspritzte Einbau-Einheit ausgebildet;
c) die Anschlüsse für die Magnetspulen (28, 29, 30) der 3-fach-Magnetspulen-Einheit (49) sind als Kontaktstifte (53) ausgebildet, welche in entsprechende Buchsen (54) auf einer die Vorsteuereinheit elektrisch ansteuernden Elektronik-Platine einsteckbar und mit dieser **durch** Befestigungsmittel (56) baulich vereinigbar sind.

## Claims

1. Pilot control unit (1) for a brake pressure modulator for at least one pressure control loop of an electronic braking system, said brake pressure modulator being provided in a trailer coupled to a towing vehicle; having the following features:
a) a first pneumatic input (4) connected to the supply pressure is provided,
b) a second pneumatic input (5) connected to the output of a valve device that makes a redundancy pressure available is provided, said redundancy pressure being derived from the brake pressure that is transferred from the towing vehicle to the trailer by way of pneumatic connections;
c) a pneumatic output (6) connected to an air volume-boosting valve device (2) is provided;
d) the pilot control unit comprises electrically activatable valve devices (7, 8, 9), the pneumatic connections (10,11,12,13,14,15) of which are interconnected in a specific manner and the electrical connections (19) of which are connected to outputs of an electronic control device (3);
e) three 2/2-way solenoid valves (7, 8, 9) are provided as valve devices, each having a first (10,12,14) and a second (11,13,15) pneumatic connection;
f) the 2/2-way solenoid valves (7, 8, 9) each have a magnet coil (28, 29, 30, 38) and a magnet armature (25, 26, 27, 39) and are to be operated in clock-controlled operating mode;
g) each of the magnet armatures (25, 26, 27, 39) and each of the magnet coils (28, 29, 30, 38) are of respective identical constructions.

2. Pilot control unit according to claim 1, **characterised by** the following features:
a) when the magnet coil (38) is without current, a first lift limitation (31), which is accommodated by the action of a solenoid valve restoring spring (40), is provided for a magnet armature (39) in a valve housing that is associated with the corresponding solenoid valve;
b) when the magnet coil (38) is supplied with current, a second lift limitation (34), which is accommodated by the action of the magnetic force acting on an armature (39), is provided for the magnet armature (39) in the valve housing of the corresponding solenoid valve;
c) on that limiting surface that comes into engagement with the first lift limitation (31) a magnet armature (38) is provided with a non-spring-loaded elastomeric insert (41) for forming the sealing seat effecting a hermetic seal;
d) on that limiting surface that comes into engagement with the second lift limitation (31) a magnet armature (38) is provided with a shaping (42) that is provided for forming a metal-to-metal sealing seat effecting a non-hermetic seal;
e) the magnet armatures (38) are of a small construction with a mass reduced to about 6 g;
f) the magnet armatures (38) are provided with a coating.

3. Pilot control unit according to at least one of the preceding claims 1 and 2, **characterised by** the following features:
a) the magnet coils (28, 29, 20) for the three solenoid valves (7, 8, 9) are in the form of a triple magnet coil unit (49);
b) the triple magnet coil unit (49) is in the form of a compact build-in unit extrusion-coated with plastics material;
c) the connections for the magnet coils (28, 29, 30) of the triple magnet coil unit (49) are in the form of contact pins (53), which are insertable in corresponding sockets (54) on an electronics printed circuit board electrically controlling the pilot control unit and are structurally combinable therewith by fixing means (56).

## Revendications

1. Unité de commande pilote (1) pour un modulateur de la pression de freinage, prévu dans une remorque couplée à un véhicule tracteur, pour au moins un circuit de régulation de pression d'une installation de freinage électronique, présentant les caractéristiques suivantes:
a) il est prévu une première entrée pneumatique (4), qui est reliée à la pression d'alimentation;
b) il est prévu une seconde entrée pneumatique (5), qui est reliée à la sortie d'un dispositif à soupapes, qui délivre une pression de redondance, qui est dérivée de la pression de freinage qui est transmise par le véhicule tracteur à la remorque par l'intermédiaire de liaisons pneumatiques;
c) il est prévu une sortie pneumatique (6) qui est reliée à un dispositif à soupapes (2) qui augmente la quantité d'air;
d) l'unité de commande pilote est constituée par des dispositifs à soupapes (7, 8, 9) pouvant être commandés électriquement, dont les raccords pneumatiques (10, 11, 12, 13, 14, 15) sont raccordés entre eux de façon déterminée et dont les raccords électriques (19) sont raccordés à des sorties d'un dispositif de commande électronique (2);
e) comme dispositifs à soupapes, il est prévu trois soupapes magnétiques à 2/2 voies (7, 8, 9) comportant chacune un premier raccord pneumatique (10, 12, 14) et un second raccord pneumatique (11, 13, 15);
f) les soupapes magnétiques à 2/2 voies (7, 8, 9) disposent respectivement d'une bobine magnétique (28, 29, 30, 38) et d'une armature magnétique (25, 26, 27, 39) et doivent fonctionner selon un mode de fonctionnement cadencé;
g) aussi bien respectivement les armatures magnétiques (25, 26, 27, 39) que respectivement les bobines magnétiques (28, 29, 30, 38) sont agencées avec un agencement identique.

2. Unité de commande pilote selon la revendication 1, **caractérisée par** les caractéristiques suivantes:
a) dans le cas où la bobine magnétique (38) n'est pas alimentée en courant, il est prévu pour une armature magnétique (39) dans une boîtier de soupape, qui est associé à la soupape magnétique correspondante, une première limite de course (31), qui est atteinte sous l'effet de l'action d'un ressort (40) de rappel de l'armature magnétique;
b) dans le cas où la bobine magnétique (38) est alimentée en courant, il est prévu pour une armature magnétique (39) dans le boîtier de la soupape magnétique correspondante, une seconde limite de course (34), qui est atteinte sous l'action de la force magnétique agissant sur l'armature (39);
c) une armature magnétique (38) comporte, au niveau de la surface de limitation, qui vient s'appliquer au niveau de la première limite de course (31), un insert élastomère (41) non chargé par un ressort et qui sert à former le siège d'étanchéité qui établit une étanchéité hermétique;
d) une armature magnétique (38) comporte, au niveau de la surface de limitation, qui vient s'appliquer au niveau de la première limite de course (31), une partie conformée (42), qui est prévue pour la formation d'un siège d'étanchéité métal-métal qui ne présente pas une étanchéité hermétique;
e) les armatures magnétiques (38) sont réalisés sous la forme d'une réalisation de petite taille avec une masse réduite à environ 6 g;
f) les armatures magnétiques (38) sont pourvues d'un revêtement.

3. Unité de commande pilote selon au moins l'une des revendications précédentes 1 ou 2, **caractérisée par** les caractéristiques suivantes:
a) les bobines magnétiques (28, 29, 30) pour les trois soupapes magnétiques (7, 8, 9) sont réalisées sous la forme d'une unité à trois bobines magnétiques (49);
b) l'unité à trois bobines magnétiques (49) est réalisée sous la forme d'une unité de construction compacte, enrobée par moulage par une matière plastique;
c) les bornes pour les soupapes magnétiques (28, 29, 30) de l'unité à trois bobines magnétiques (49) sont réalisées sous la forme de tiges de contact (53) qui peuvent être enfichées dans des douilles correspondantes (54) sur une platine électronique qui commande électriquement l'unité de commande pilote et peut être réunie du point de vue construction à cette platine à l'aide de moyens de fixation 56).
